# EUROPEAN PATENT SPECIFICATION

(11) **EP 3 232 405 B1**
(45) Date of publication and mention of the grant of the patent: **06.05.2020**
(21) Application number: 15868468.8
(22) Date of filing: 09.09.2015
(51) Int. Cl.: G06T 15/06, G06T 15/60

(54) **IMAGE PROCESSING APPARATUS AND METHOD FOR PROCESSING IMAGES**
BILDVERARBEITUNGSVORRICHTUNG UND VERFAHREN ZUR VERARBEITUNG VON BILDERN
APPAREIL ET PROCÉDÉ DE TRAITEMENT D'IMAGES

(30) Priority: 12.12.2014 KR 20140179338
(43) Date of publication of application: 18.10.2017
(73) Proprietor: Samsung Electronics Co., Ltd., Suwon-si, Gyeonggi-do 16677 (KR)
(72) Inventor: CHANG, Byung-joon, Seoul 07017 (KR); KIM, Kyung-su, Seoul 01690 (KR); ROH, Won-jun, Seoul 04751 (KR); LEE, Jae-woong, Seongnam-si Gyeonggi-do 13617 (KR); PARK, Chan-min, Seoul 06510 (KR); LEE, Gun-ill, Seoul 07542 (KR); CHO, In-sang, Suwon-si Gyeonggi-do 16544 (KR)
(74) Representative: Gulde & Partner
(86) International application number: PCT/KR2015/009470
(87) International publication number: WO 2016/093470

(56) References cited:
- EP-A1- 2 336 977
- KR-A- 20100 077 423
- KR-A- 20110 059 037
- KR-A- 20140 036 519
- KR-A- 20140 048 627
- US-A- 5 305 430
- US-A1- 2012 081 368
- US-A1- 2014 078 143
- US-A1- 2014 078 145
- US-A1- 2014 078 145
- FORMELLA A ET AL: "Fast ray tracing of sequences by ray history evaluation", COMPUTER ANIMATION '94., PROCEEDINGS OF GENEVA, SWITZERLAND 25-28 MAY 1, LOS ALAMITOS, CA, USA,IEEE COMPUT. SOC, 25 May 1994 (1994-05-25), pages 184-191, XP010099672, DOI: 10.1109/CA.1994.323992 ISBN: 978-0-8186-6240-9
- Tong Zhang: "GPU-BASED GLOBAL ILLUMINATION USING LIGHTCUTS", , 1 May 2011 (2011-05-01), XP055401722, Purdue University West Lafayette, Indiana Retrieved from the Internet: URL:https://search.proquest.com/docview/18 41914151?accountid=29404 [retrieved on 2017-08-28]
- Anonymous: "K-ary tree - Wikipedia", , 17 September 2014 (2014-09-17), XP055402049, Retrieved from the Internet: URL:https://en.wikipedia.org/w/index.php?t itle=K-ary_tree&oldid=625997076 [retrieved on 2017-08-29]
- Donald Knuth: "Chapters 2.1 to 2.2.2" In: "The Art of Computer Programming Volume 1 Fundamental Algorithms Third Edition", 1 May 1997 (1997-05-01), Addison-Wesley 031019, XP055497298, ISBN: 978-0-201-89683-1 pages 232-251,

## Description

### [Technical Field]

The present disclosure relates to an image processing apparatus and an image processing method in the image processing apparatus, and more particularly, to an image processing apparatus and an image processing method in the image processing apparatus for effective shading in ray tracing.

### [Background Art]

An existing image processing apparatus performing image processing using the ray tracing technique performs a shading operation on the basis of information on non-shadow rays meeting a specific region of an object, starting from a user's point of view and information on shadow rays derived from the non-shadow rays.

That is, the image processing apparatus performs the shading operation using the information on the non-shadow rays and the information on the shadow rays derived from the non-shadow rays that are stored in the memory.

The information on the non-shadow rays and the information on the shadow rays derived from the non-shadow rays are stored in memory while making a pair. Specifically, when the number of shadow rays derived from first non-shadow rays is N, the first non-shadow rays and the N shadow rays derived from the first non-shadow rays are each stored in each address of a first region of the memory while making pairs.

As described above, the existing image processing apparatus forms in pair the information on the non-shadow rays and the information on the respective shadow rays derived from the non-shadow rays and stores the pairs of the information in a memory, and therefore the memory in which a large amount of data may be stored is required, such that there is a problem in that a hardware size increases.

In addition, the information on the non-shadow rays and the information on the respective shadow rays derived from the non-shadow rays are stored in each address of the memory while making a pair, and therefore the existing image processing apparatus performs the shading operation based on the information stored in each address, such that there is a problem in that the computation amount of the shading increases and power consumption for the shading operation increases.
EP 2 336 977 A1 suggests a hardware system for performing a plurality of calculations on at least one object in an area, said system comprising means for performing ray tracing to determine rays of light that intersect with at least one object to calculate one or more intersections; and means for performing collision detection comprising a collision detection unit adapted to receive inputs from the at least two intersections and the ray used to intersect to check for potential collisions between the objects.
In the article "Fast ray tracing of sequences by ray history evaluation" to A. Formella , Ch. Gill, and V. Hofmeyer, Computer Animation '94., Proceedings of, 25-28 May, Geneva, Switzerland, a method to reduce the time needed to render a sequence of ray traced images is suggested. Temporal and spatial coherence between consecutive frames are exploited. The algorithm does not only inspect the image plane in order to find regions with minor changes; the object space is analyzed by evaluating the so called ray history.
In the thesis entitled "GPU-based global illumination using lightcuts" to Tong Zhang, May 2011, West Lafayette, Indiana, USA, hardware and software combined solutions to global illumination are suggested.
K-array trees are described in a Wikipedia article at https://en.wikipedia.org/wiki/K-ary_tree.

### [Disclosure]

### [Technical Problem]

The present disclosure more effectively performs a shading operation in performing image processing using a ray tracing technique.

The present disclosure more efficiently uses a memory in which information on non-shadow rays and information on at least one shadow ray derived from the non-shadow rays are stored.

The present disclosure minimizes power consumption generated during performance of a shading operation using information stored in a memory.

### [Technical Solution]

The invention is defined by the technical features of the attached claims. Examples describing certain aspects related to the invention are summarized as follows. According to an aspect of the present disclosure, an image processing method in an image processing apparatus includes: sequentially storing, in a memory, a non-shadow ray and at least one shadow ray derived from the non-shadow ray; and performing a shading operation using the non-shadow ray and at least one shadow ray that are sequentially stored in the memory.

The image processing method may further include: receiving a ray; allocating identification information corresponding to the non-shadow ray if it is determined that an input ray is the non-shadow ray; and storing the non-shadow ray and the identification information corresponding to the non-shadow ray in a first address of the memory.

The image processing method may further include: generating a first shadow ray derived from the non-shadow ray; determining a second address of the memory in which the first shadow ray is to be stored based on the identification information on the non-shadow ray; and storing the first shadow ray in the memory based on the determined second address.

The image processing method may further include: generating a second shadow ray derived from the non-shadow ray; determining a third address of the memory in which the second shadow ray is to be stored based on the identification information on the non-shadow ray; and storing the second shadow ray in the memory based on the determined third address.

The first to third addresses may be sequential.

In the performing of the shading operation, an intersecting point data may be generated using non-shadow rays and the first and second shadow rays derived from the non-shadow rays that are stored in the first to third addresses of the memory and the shading operation may be performed based on the intersecting point data to determine a final color of the intersecting point based on the non-shadow rays.

The intersecting point data may include coordinate information on the intersecting point of the non-shadow ray, index information on an object, and color information on the first and second shadow rays.

According to another aspect of the present disclosure, an image processing apparatus includes: a memory; a ray processor sequentially storing, in a memory, a non-shadow ray and at least one shadow ray derived from the non-shadow ray; and a shader performing a shading operation using the non-shadow ray and at least one shadow ray that are sequentially stored in the memory.

The ray processor may include: a ray analyzer analyzing a type of input ray if a ray on which an intersection test is performed is input; and a non-shadow ray processor allocating identification information corresponding to the non-shadow ray if it is determined that the input ray is the non-shadow ray and storing the non-shadow ray and the identification information corresponding to the non-shadow ray in a first address of the memory.

The image processing apparatus may further include: a ray generator generating a first shadow ray derived from the non-shadow ray, in which the ray processor may further include a shadow ray processor determining a second address of the memory in which the first shadow ray is to be stored based on identification information on the non-shadow ray if the first shadow ray is input and storing the first shadow ray in the memory based on the determined second address.

The ray generator may generate a second shadow ray derived from the non-shadow ray and the shadow ray processor may determine a third address of the memory in which the second shadow ray is to be stored based on the identification information on the non-shadow ray and store the second shadow ray in the memory based on the determined third address.

The first to third addresses may be sequential.

The shader may generate an intersecting point data using non-shadow rays and the first and second shadow rays derived from the non-shadow rays that are stored in the first to third addresses of the memory and perform the shading operation based on the intersecting point data to determine a final color of the intersecting point based on the non-shadow rays.

The intersecting point data may include coordinate information on the intersecting point of the non-shadow ray, index information of an object, and color information of the first and second shadow rays.

According to still another aspect of the present disclosure, a computer program is combined with an image processing apparatus and stored in a recording medium to allow the image processing method in the image processing apparatus to execute the following steps: sequentially storing a non-shadow ray and at least one shadow ray derived from the non-shadow ray in a memory and performing a shading operation using the non-shadow ray and at least one shadow ray that are sequentially stored in the memory.

### [Advantageous Effects]

According to various embodiments of the present invention as described above, the image processing apparatus sequentially stores the information on the non-shadow rays and the information on at least one shadow ray derived from the non-shadow rays, thereby more efficiently using the memory. Furthermore, the image processing apparatus according to the present invention may minimize the power consumption generated during the performance of the shading operation as well as more efficiently performing the shading operation using the information stored in the memory

### [Description of Drawings]

FIG. 1 is a block diagram of an image processing apparatus according to an exemplary embodiment of the present invention;
FIG. 2 is a detailed block diagram of a ray processor according to an exemplary embodiment of the present invention;
FIG. 3 is a diagram illustrating an example of sequentially storing a non-shadow ray and a shadow ray derived from the non-shadow ray in a memory according to an exemplary embodiment of the present invention;
FIGS. 4A and 4B are exemplified diagrams illustrating a data structure for a shading operation by a shader according to the related art and an exemplary embodiment of the present invention;
FIG. 5 is a flow chart illustrating an image processing method in an image processing apparatus according to an exemplary embodiment of the present invention; and
FIG. 6 is a flow chart illustrating a method of storing at least one shadow ray derived from a non-shadow ray in a memory in the image processing apparatus according to the exemplary embodiment of the present invention.

### [Best Mode]

The present invention may be variously modified and have several forms. Therefore, specific exemplary embodiments of the present invention will be illustrated in the accompanying drawings and be described in detail in the present specification. However, it is to be understood that the present disclosure is not limited to a specific embodiment, but includes all modifications, equivalents, and substitutions without departing from the scope and spirit of the present disclosure. When it is determined that the detailed description of the known art related to the present invention may obscure the gist of the present invention, the detailed description thereof will be omitted.

Terms 'first', 'second', and the like, may be used to describe various components, but the components are not to be construed as being limited by the terms. The terms are used to distinguish one component from another component.

Terms used in the present specification are used only in order to describe specific exemplary embodiments rather than limiting the present invention. Singular forms used herein are intended to include plural forms unless context explicitly indicates otherwise. It will be further understood that the terms "comprises" or "have" used in this specification, specify the presence of features, numerals, steps, operations, components, parts mentioned in this specification, or a combination thereof, but do not preclude the presence or addition of one or more other features, numerals, steps, operations, components, parts, or a combination thereof.

In the exemplary embodiments, a 'module' or a 'unit' may perform at least one function or operation, and be implemented by hardware or software or be implemented by a combination of hardware and software. Further, a plurality of 'modules' or a plurality of 'units' are integrated into at least one module except for the 'module' or 'unit' which needs to be implemented by specific hardware and thus may be implemented by at least one processor (not illustrated).

Hereinafter, an exemplary embodiment of the present invention will be described in detail with reference to the accompanying drawings. In describing an exemplary embodiment of the present invention with reference to the accompanying drawings, components that are the same as or correspond to each other will be denoted by the same reference numerals, and an overlapped description thereof will be omitted.

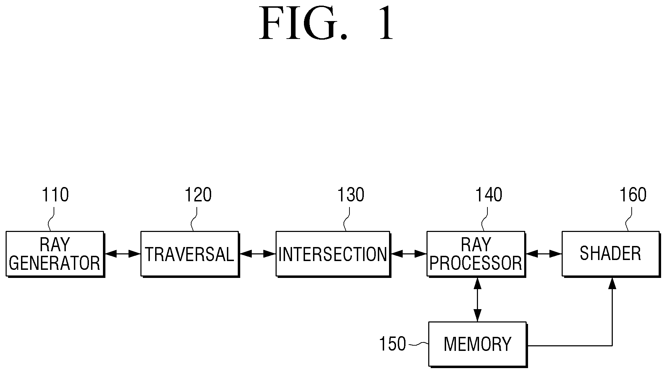

FIG. 1 is a block diagram of an image processing apparatus according to an exemplary embodiment of the present invention.

As illustrated in FIG. 1, the image processing apparatus includes a ray generator 110, a traversal 120, an intersection 130, a ray processor 140, a memory 150, and a shader 160.

The ray generator 110 generates rays for determining color information on pixels within a screen according to a ray tracing technique. Specifically, the ray generator 110 may generate at least one ray based on ray generation information. In particular, the ray generator 110 may acquire screen coordinate values of rays based on the ray generation information and generate the rays based on the acquired coordinate values of the screen and a position (i.e., positions of user's eyes) of a camera.

Generally, rays used in a ray tracing technique may largely include at least one of primary rays (hereinafter, referred to as non-shadow rays) meeting a specific region of an object, starting from a user's point of view, secondary rays derived or refracted depending on a nature of the object at intersecting points where the non-shadow rays and the specific region of the object meet each other, and shadow rays for determining whether light comes in directly from each light source at each intersecting point.

Meanwhile, a ray tracing technique which is one of the techniques used in 3D computer graphics forms shapes of each object while tracing paths through which light from a virtual light source is reflected from surfaces of several objects. That is, the ray tracing technique which finds out rays entering user's eyes to display colors of the rays on the screen finds out the colors of the rays entering the user's eyes in various directions to generate a 3D image.

The ray tracing technique may be largely divided into two techniques.

One may be a forward ray tracing technique of subdividing and accumulating a direction of light from the light source and the other may be a backward ray tracing technique of tracing a line of sight from the user's eyes toward the light source.

The forward ray tracing technique has the advantage of more faithfully simulating the natural phenomenon than the backward ray tracing technique, but has a disadvantage of tracing all the rays in various directions emitted from the light source.

Meanwhile, the backward ray tracing technique finds out an object from which light is emitted by tracing the direction of the user's line of sight. The fact that the line of sight has touched an object means that the light of the object comes into the eye in that direction, and therefore if the light is reversely traced in the direction of the line of sight, only the rays that will enter the user's eyes may be traced. Therefore, it is possible to trace the rays more effectively than the forward ray tracing technique which finds out the light that will enter the user's eyes among a myriad of light emitted from the light source.

The traversal (TRV) 120 performs a tree search on the received ray. At this point, the traversal 120 may use a kd-tree which is a kind of a spatial partitioning tree scheme. The kd-tree includes a box node, an inner node, and a leaf node, and the leaf node may include a triangle list for pointing at least one triangle information included in geometric data. According to the exemplary embodiment of the present invention, when the triangle information included in the geometric data is implemented as an array, the triangle list included in the leaf node may correspond to an array index.

However, as described above, using the kd-tree is merely an exemplary embodiment, and therefore various tree search techniques such as bounding volume hierarchy (BVH) may be used.

The traversal 120 may be implemented in plural, in which each traversal 120 independently performs a tree search for rays, thereby minimizing a generation of a load involved by the tree search.

The intersection (1ST) 130 performs an intersection test on rays on which the tree search is performed by the traversal 120. Specifically, the intersection 130 searches for the leaf node intersecting with rays. Further, the intersection 130 reads a triangle list included in the leaf node intersecting with the rays. In addition, the intersection 130 may read coordinate information on the triangle list and perform an intersection test on the given rays, and use a distance from the triangle hit by rays and a vector value of the given rays to calculate a coordinate value of a ray-triangle hit point.

The ray processor 140 generates the intersection information based on previously generated basic intersection information and stores the generated intersection information in the memory 150. Specifically, the ray generator 110 generates the basic intersection information based on at least one of a viewpoint, a light source, a nature of an object, the triangle information, and a tree structure of a predetermined scene viewed by a user, and origin and direction information on the previously generated rays.

Herein, the basic intersection information which is generated by the above-described ray generator 110 may include information on shadow rays indicating whether a light source directly affects intersecting points hit by rays and information on non-shadow rays indicating points where a shading operation is performed.

If the basic intersection information is generated, the ray processor 140 generates the intersection information based on the generated basic intersection information and stores it in the memory 150. Herein, the intersection information may be the information (hereinafter, referred to as non-shadow rays) on the non-shadow rays and the information (hereinafter, referred to as shadow rays) on at least one shadow ray derived from non-shadow rays. Accordingly, the ray processor 140 may sequentially store in the memory 140 the non-shadow rays and least one shadow ray derived from the non-shadow rays based on the previously generated basic intersection information.

The shader 160 performs the shading operation using the non-shadow rays and at least one shadow ray derived from the non-shadow rays that are sequentially stored in the memory 150 and accumulates the performed shading results in image pixels to determine a final color for the intersecting point. Specifically, the shader 160 generates intersecting point data using the non-shadow rays and at least one shadow ray derived from the corresponding non-shadow rays that are stored in the memory 150. Thereafter, the shader 160 performs the shading operation based on the generated intersecting point data to determine the final color for the intersecting point based on the non-shadow ray.

Here, the intersecting point data may include coordinate information on the intersecting point of the non-shadow rays, index information on the object and color information on at least one shadow ray derived from the corresponding non-shadow rays. Therefore, the shader 160 generates colors for the intersecting point of the non-shadow rays using the coordinate information on the intersecting point of the non-shadow rays and the index information on the object. Thereafter, the shader 160 may use the color information on at least one shadow ray derived from the corresponding non-shadow rays to determine the final color for the intersecting point of the previously generated non-shadow rays.

Hereinafter, the above-described ray processor 140 will be described in more detail.

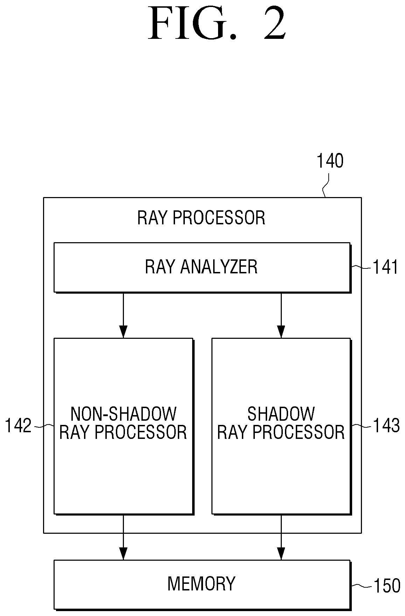

FIG. 2 is a detailed block diagram of a ray processor according to an exemplary embodiment of the present invention.

As illustrated in FIG. 2, the ray processor 140 for generating the intersection information based on the previously generated basic intersection information and storing the generated intersection information in the memory 150 includes a ray analyzer 141, a non-shadow ray processor 142, and a shadow ray processor 143.

If rays on which an intersection test is performed are input from the intersection 130, the ray analyzer 141 analyzes a type of input rays to determine whether the input rays are the non-shadow rays or the shadow rays derived from the corresponding non-shadow rays.

If it is determined that the rays input through the ray analyzer 141 are the non-shadow rays, the non-shadow ray processor 143 generates identification information corresponding to the non-shadow rays. Thereafter, the non-shadow ray processor 143 stores the input non-shadow rays and the identification information corresponding to the corresponding non-shadow rays in a first address of the memory 150.

If it is determined that the rays input through the ray analyzer 141 are the shadow rays, the shadow ray processor 143 determines an address of the memory 150 in which the shadow rays are stored, based on the identification information allocated to the corresponding shadow ray. Thereafter, the shadow ray processor 143 stores the corresponding shadow rays in the memory 150 based on the determined address.

Specifically, if rays are input, the ray analyzer 141 may determine whether the input rays are the non-shadow rays or the shadow rays derived from the corresponding non-shadow rays, based on whether the identification information is allocated to the input rays. As the determination result, if the identification information is not assigned to the input rays, the ray analyzer 141 determines the input rays as the non-shadow rays. If the input rays are the non-shadow rays, the non-shadow ray processor 143 allocates the identification information corresponding to the input non-shadow rays and stores the input non-shadow rays and the identification information corresponding to the corresponding non-shadow rays in the first address of the memory.

As described above, if the input non-shadow ray and the identification information corresponding to the corresponding non-shadow ray are stored in the first address of the memory 150, the non-shadow ray processor 141 transmits to the ray generator 110 the non-shadow rays and the identification information corresponding to the corresponding non-shadow rays that are stored in the first address of the memory 150. Accordingly, the ray generator 110 generates a first shadow ray derived from the corresponding non-shadow rays, based on the non-shadow rays and the identification information corresponding to the corresponding non-shadow rays that are stored in the first address of the memory 150. At this point, it is preferable that the ray generator 110 generates the first shadow ray including the identification information corresponding to the non-shadow rays stored in the first address of the memory 150. Here, the first shadow ray may be a ray corresponding to a first light source irradiated to the intersecting point of the non-shadow rays stored in the first address of the memory 150.

If the first shadow ray is generated, the intersection 130 performs the intersection test on the first shadow ray and then outputs the first shadow ray to the ray processor 140. If the first shadow ray is output to the ray processor 140, the ray analyzer 141 may determine whether the input ray is the first shadow ray based on the identification information included in the input ray. If the input ray is the first shadow ray, the shadow ray processor 143 determines a second address of the memory 150 in which the first shadow ray is to be stored based on the corresponding identification information and stores the first shadow ray in the memory 150 based on the determined second address.

Accordingly, the non-shadow rays and the first shadow ray to which the same identification information is allocated may be sequentially stored in the memory 150.

Meanwhile, a second light source may be irradiated to the intersecting point of the non-shadow rays stored in the first address of the memory 150. In this case, if the first shadow ray derived from the non-shadow rays stored in the first address is stored in the second address of the memory 150, the non-shadow ray processor 141 transmits to the ray generator 110 the non-shadow ray stored in the first address of the memory 150 and the identification information corresponding to the corresponding non-shadow rays. Accordingly, the ray generator 110 generates a second shadow ray derived from the corresponding non-shadow rays, based on the non-shadow rays and the identification information corresponding to the corresponding non-shadow rays that are stored in the first address of the memory 150. At this point, it is preferable that the ray generator 110 generates the second shadow ray including the identification information corresponding to the non-shadow rays stored in the first address of the memory 150. Here, the second shadow ray may be a ray corresponding to a second light source irradiated to the intersecting point of the non-shadow rays stored in the first address of the memory 150.

If the second shadow ray is generated, the intersection 130 performs the intersection test on the second shadow ray and then outputs the second shadow ray to the ray processor 140. If the second shadow ray is output to the ray processor 140, the ray analyzer 141 may determine whether the input ray is the second shadow ray based on the identification information included in the input ray. If the input ray is the second shadow ray, the shadow ray processor 143 determines a third address of the memory 150 in which the second shadow ray is to be stored based on the corresponding identification information and stores the second shadow ray in the memory 150 based on the determined third address.

That is, if the N light sources are irradiated to the intersecting point of the non-shadow ray stored in the first address of the memory 150, the ray generator 110 may generate the number of shadow rays corresponding to the N light sources irradiated and the shadow ray processor 143 may sequentially store each of the number of shadow rays corresponding to the N light sources after the first address of the memory 150 in which the non-shadow rays are stored.

If the non-shadow rays and the first and second shadow rays derived from the non-shadow rays are sequentially stored in the first to third addresses of the memory 150, the shader 160 may generate the intersecting point data based on the non-shadow rays and the first and second shadow rays derived from the non-shadow rays that are sequentially stored in the first to third addresses of the memory 150. Thereafter, the shader 160 may perform the shading operation based on the generated intersecting point data to determine the final color for the intersecting point based on the non-shadow ray.

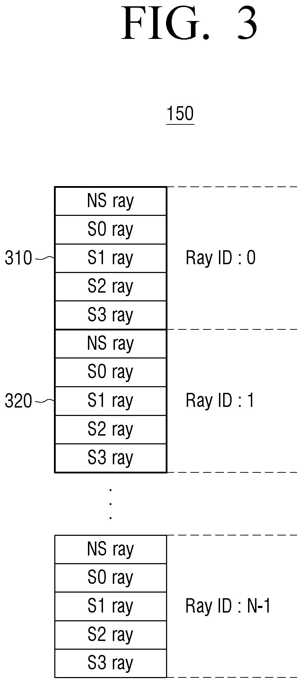

FIG. 3 is a diagram illustrating an example of sequentially storing a non-shadow ray and a shadow ray derived from the non-shadow ray in a memory according to an exemplary embodiment of the present invention.

As illustrated in FIG. 3, a plurality of non-shadow rays corresponding to the respective intersecting points meeting each region of the object, and at least one shadow ray derived from the respective non-shadow rays are sequentially stored in each region of the memory 150.

Specifically, a first non-shadow ray NS_1 corresponding to a first intersecting point meeting a first region of the object and identification information RayID : 0 allocated to the first non-shadow ray NS_1 may be stored in a first address of a first region 310 of the memory 150. Meanwhile, if four light sources are irradiated to the first intersecting point of the first non-shadow ray NS_1, first to fourth shadow rays S0 to S3 derived from the first non-shadow ray NS_1 may sequentially be stored in second to fifth addresses of the first region 310. Here, the first to fourth shadow rays S0 to S3 may include the same identification information Ray ID : 0 as the first non-shadow ray NS_1.

Further, a second non-shadow ray NS_2 corresponding to a second intersecting point meeting a second region of the object and identification information RayID : 1 allocated to the second non-shadow ray NS_2 may be stored in a second address of a second region 320 of the memory 150. Meanwhile, if four light sources are irradiated to the second intersecting point of the second non-shadow ray NS_2, the first to fourth shadow rays S0 to S3 derived from the second non-shadow ray NS_2 may sequentially be stored in second to fifth addresses of the second region 320. Here, the first to fourth shadow rays S0 to S3 may include the same identification information Ray ID : 1 as the second non-shadow ray NS_2.

That is, if the N non-shadow rays and the identification information allocated to each of the N non-shadow rays are stored in each region of the memory 150, the shadow rays derived from each of the N non-shadow rays as many as the number of light resources irradiated to each of the intersecting points of the N non-shadow rays may be sequentially stored in each region in which the N non-shadow rays are stored.

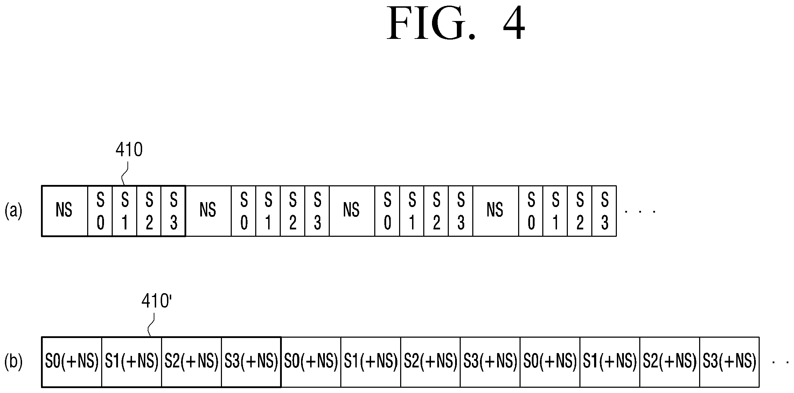

FIGS. 4A and 4B are exemplified diagrams illustrating a data structure for a shading operation by a shader according to the related art and an exemplary embodiment of the present invention.

FIG. 4A is a data structure for the shading operation according to an exemplary embodiment of the present invention and FIG. 4B is a data structure for the existing shading operation.

As describe above, the plurality of non-shadow rays corresponding to the respective intersecting points meeting each region of the object and at least one shadow ray derived from the respective non-shadow rays may be sequentially stored in each region of the memory 150.

As illustrated in FIG. 3, the first non-shadow ray corresponding to the first intersecting point meeting the first region of the object and the identification information RayID : 0 allocated to the first non-shadow ray may be stored in the first address of the first region 310 of the memory 150. Meanwhile, if the four light sources are irradiated to the first intersecting point of the first non-shadow ray, the first to fourth shadow rays derived from the first non-shadow ray may sequentially be stored in the second to fifth addresses of the first region 310.

As described above, the first region 310 of the memory 150 in which the first non-shadow ray and the first to fourth shadow ray derived from the first non-shadow ray are sequentially stored may be a first data structure region 410 of the data structures shown in FIG. 4A. Accordingly, if the shading operation is performed on the first data structure region 410, the shader 160 generates intersecting point data using the first non-shadow ray and the first to fourth shadow rays derived from the first non-shadow ray that are sequentially stored in each address of the memory 150. Thereafter, the shader 160 may perform the shading operation based on the generated intersecting point data to determine the final color for the intersecting point based on the first non-shadow ray.

Meanwhile, conventionally, the plurality of non-shadow rays corresponding to the respective intersecting points meeting each region of the object and at least one shadow ray derived from the respective non-shadow rays may be stored in each region of the memory 150 while making a pair.

For example, conventionally, the first non-shadow ray corresponding to the first intersecting point meeting the first region of the object and the first shadow ray derived from the first non-shadow ray may be stored in the first address of the first area of the memory 150 while making a pair and the first non-shadow ray and the second shadow ray derived from the first non-shadow ray may be stored in the second address of the first region while making a pair.

If the four light sources are irradiated to the intersecting point of the first non-shadow ray, the first non-shadow ray and each of the first to third shadow rays derived from the first non-shadow ray may be stored in each address of the first region while making a pair.

As described above, the first region 310 of the memory 150 in which the first non-shadow ray and each of the first to third shadow rays derived from the first non-shadow ray are sequentially stored while making a pair may be a 1-1-th data structure region 410' of the data structures shown in FIG. 4B.

Therefore, if the shading operation is performed on the 1-1-th data structure region 410', the shader 160 has to perform the shading operation on the first non-shadow ray and the first shadow ray, the first non-shadow ray and the second shadow ray, the first non-shadow ray and the third shadow ray, and the first non-shadow ray and the fourth shadow ray, respectively, that are stored in each address of the memory 150.

As described above, the image processing apparatus according to the exemplary embodiment of the present invention sequentially stores the plurality of non-shadow rays corresponding to the respective intersecting points meeting each region of the object and at least one shadow ray derived from the respective non-shadow rays, thereby efficiently using the space of the memory 150 to minimize the hardware size and simplifying the shading operation to minimize the power consumption due to the shading operation as compared to the related art.

Hereinafter, an image processing method in the image processing apparatus according to an exemplary embodiment of the present invention will be described in detail.

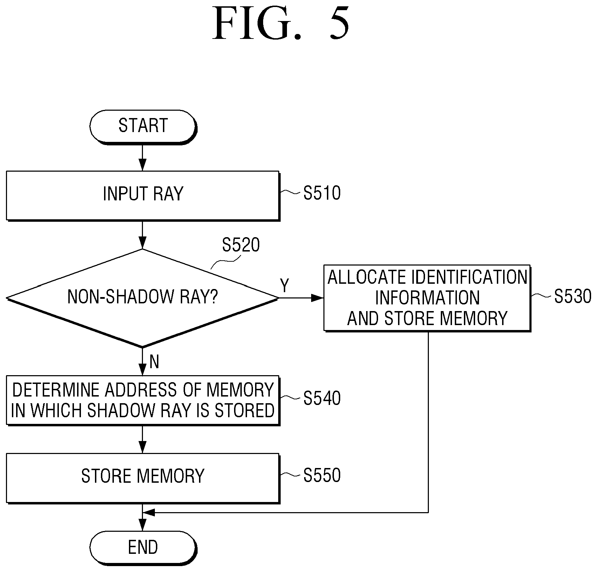

FIG. 5 is a flow chart illustrating an image processing method in an image processing apparatus according to an exemplary embodiment of the present invention.

As illustrated in FIG. 5, if the rays on which the intersection test is performed are input from the intersection 130, the image processing apparatus analyzes the type of input rays to determine whether the input rays are the non-shadow rays or the shadow rays derived from the corresponding non-shadow rays (S510 and S520).

Specifically, if the rays on which the intersection test is performed are input, the image processing apparatus may determine whether the input rays are the non-shadow rays or the shadow rays derived from the corresponding non-shadow rays, based on whether the identification information is allocated to the input rays. As the determination result, if the identification information is not included in the input rays, the image processing apparatus determines that the input rays are the non-shadow rays, allocates the identification information corresponding to the input non-shadow rays, and stores the input non-shadow rays and the identification information corresponding to the corresponding non-shadow rays in the first address of the memory (S530).

Meanwhile, if it is determined in step S520 that the identification information is included in the input rays, the image processing apparatus determines that the input rays are the shadow rays. If it is determined that the input rays are the shadow rays, the address of the memory in which the input shadow rays is to be stored is determined based on the identification information included in the input shadow rays (S540).

Next, the image processing apparatus stores the input shadow ray in the memory, based on the address determined in association with the input shadow rays. That is, the input shadow rays may be sequentially stored after the non-shadow rays to which the same identification information as the corresponding shadow rays are allocated are stored.

Hereinafter, a method of sequentially storing at least one shadow ray derived from non-shadow rays in a memory will be described in detail.

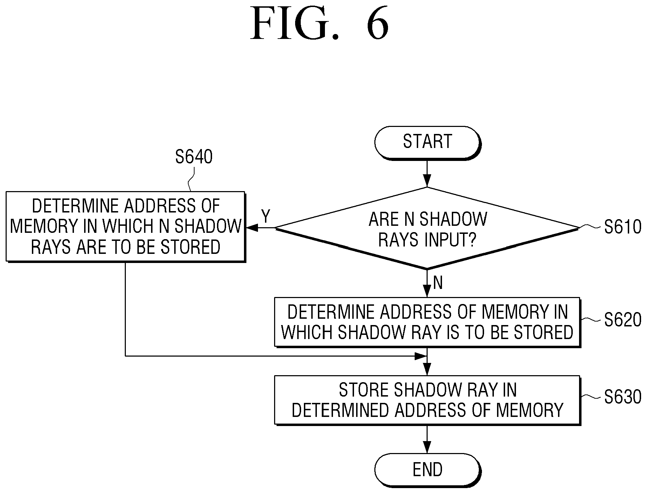

FIG. 6 is a flow chart illustrating a method of storing at least one shadow ray derived from a non-shadow ray in a memory in the image processing apparatus according to the exemplary embodiment of the present invention.

As illustrated in FIG. 6, if it is determined that the input rays are the shadow rays (hereinafter, referred to as the first shadow ray) derived from the first non-shadow ray, the image processing apparatus determines whether the number of shadow rays derived from the first non-shadow ray is N (S610). As the determination result, if it is determined that the number of first shadow rays derived from the first non-shadow ray is one, the image processing apparatus determines the address of the memory in which the first shadow ray is to be stored, based on the identification information included in the first shadow ray derived from the first non-shadow ray (S620).

As described above, if the address of the first shadow ray is determined, the image processing apparatus stores the first shadow ray in the determined address of the memory (S630). For example, if the first non-shadow ray is stored in the first address of the first region of the memory, the image processing apparatus may store the first shadow ray derived from the first non-shadow ray in the second address of the memory. That is, the first shadow ray may be sequentially stored in the first region of the memory in which the first non-shadow ray to which the same identification information as the first shadow ray is allocated is stored.

Meanwhile, if it is determined in step S610 that the number of shadow rays derived from the first non-shadow ray is N, the image processing apparatus determines the address of the memory in which the N shadow rays are to be stored, based on the identification information included in each of the N shadow rays in step S620. As described above, if the address of the memory for the N shadow rays is determined, the image processing apparatus stores each of the N shadow rays in the determined addresses of the memory for each N shadow rays in step S630.

For example, two light sources may be irradiated to the intersecting point of the first non-shadow ray. In this case, each of the first and second shadow rays derived from the first non-shadow ray may be input. In this case, the image processing apparatus determines the address (second address) for storing the first shadow ray in the first area of the memory in which the first non-shadow ray is stored, based on the identification information included in the input first shadow ray. Further, the image processing apparatus determines the address (third address) for storing the second shadow ray in the first area of the memory in which the first non-shadow ray is stored, based on the identification information included in the input second shadow ray.

In this way, if the addresses for each of the first and second shadow ray are determined, the image processing apparatus may store the first shadow ray in the second address of the first region of the memory in which the first non-shadow ray is pre-stored and store the second shadow ray in the third address of the first region of the corresponding memory.

In this way, when the N light sources are irradiated to the intersecting points of the non-shadow rays, the image processing apparatus may continuously receive the shadow rays as many as the irradiated N light sources and may sequentially store each of the shadow rays as many as the N light sources after the address of the memory in which the corresponding non-shadow rays are stored.

As described above, the image processing apparatus according to the exemplary embodiment of the present invention sequentially stores the plurality of non-shadow rays corresponding to the respective intersecting points meeting each region of the object and at least one shadow ray derived from the respective non-shadow rays, thereby efficiently using the space of the memory 150 to minimize the hardware size and simplifying the shading operation to minimize the power consumption due to the shading operation as compared to the related art.

Meanwhile, the image processing method in the image processing apparatus as described above may be implemented as an executable program that may be stored in various types of recording media and executed by a CPU included in various electronic apparatuses, and the executable program may be stored in a non-transitory computer readable medium.

The non-transitory computer readable medium is not a medium that stores data for a while, such as a register, a cache, and a memory, but means medium that semi-permanently stores data and is readable by a device. In detail, the executable programs may be stored in various types of recording media that are readable by a terminal, such as a random access memory (RAM), a flash memory, a read only memory (ROM), an erasable programmable ROM (EPROM), an electronically erasable programmable ROM (EEPROM), a register, a hard disk, a removable disk, a memory card, a universal serial bus (USB) memory, and a compact-disk (CD) ROM.

## Claims

1. An image processing method in an image processing apparatus for shading in ray tracing, comprising:
sequentially storing, in consecutive addresses of a region (310) in a memory, information on a non-shadow ray and information on at least two shadow rays derived from the non-shadow ray, the at least two shadow rays corresponding to at least two virtual light sources, respectively; and
performing a shading operation using the information on the non-shadow ray and the information on the at least two shadow rays that are sequentially stored in the consecutive addresses of the region in the memory,
wherein the performing of the shading operation comprises:
generating intersecting point data based on the information on the non-shadow ray and the information on the at least two shadow rays, and
performing the shading operation based on the generated intersecting point data to determine the final color for the intersecting point based on the non-shadow ray
wherein the non-shadow ray is a virtual line meeting a specific region of an object, starting from a user's point of view, and
wherein the at least two shadow rays are virtual lines determining whether light comes in directly from the at least two virtual light sources at the intersecting point.

2. The image processing method as claimed in claim 1, further comprising:
receiving (S510) a ray;
allocating (S530) identification information corresponding to the non-shadow ray if it is determined (S520) that the input ray is the non-shadow ray; and
storing (S530) the information on the non-shadow ray and the identification information corresponding to the non-shadow ray in a first address of the consecutive addresses of the region in the memory.

3. The image processing method as claimed in claim 2, further comprising:
generating a first shadow ray derived from the non-shadow ray;
determining (S620) a second address of the consecutive addresses of the region in the memory in which the information on the first shadow ray is to be stored based on the identification information on the non-shadow ray; and
storing (S630) the information on the first shadow ray in the memory based on the determined second address.

4. The image processing method as claimed in claim 3, further comprising:
generating a second shadow ray derived from the non-shadow ray;
determining a third address of the consecutive addresses of the region in the memory in which the information on the second shadow ray is to be stored based on the identification information on the non-shadow ray; and
storing the information on the second shadow ray in the memory based on the determined third address.

5. The image processing method as claimed in claim 4, wherein in the performing of the shading operation, an intersecting point data is generated using the information on the non-shadow ray and the information on the first and second shadow rays derived from the non-shadow ray that are stored in the first to third addresses of the consecutive addresses of the region in the memory and the shading operation is performed based on the intersecting point data to determine a final color of the intersecting point based on the information on the non-shadow rays.

6. The image processing method as claimed in claim 5, wherein the intersecting point data includes coordinate information on the intersecting point of the non-shadow ray, index information on an object, and color information on the first and second shadow rays.

7. An image processing apparatus for shading in ray tracing, comprising:
a memory (150);
a ray processor (140) configured to sequentially store, in consecutive addresses of a region in the memory, information on a non-shadow ray and information on at least two shadow rays derived from the non-shadow ray, the at least two shadow rays corresponding to at least two virtual light sources, respectively; and
a shader (160) configured to perform a shading operation using the information on the non-shadow ray and the information on the at least two shadow rays that are sequentially stored in the consecutive addresses of the region in the memory,
wherein the shader (160) is configured to:
generate intersecting point data based on the information on the non-shadow ray and the information on the at least two shadow rays, and
perform the shading operation based on the generated intersecting point data to determine the final color for the intersecting point based on the non-shadow ray,
wherein the non-shadow ray is a virtual line meeting a specific region of an object, starting from a user's point of view, and
wherein the at least two shadow rays are virtual lines determining whether light comes in directly from the at least two virtual light sources at the intersecting point.

8. The image processing apparatus as claimed in claim 7, wherein the ray processor (140) includes:
a ray analyzer (141) configured to analyze a type of input ray if a ray on which an intersection test is performed is input; and
a non-shadow ray processor (142) configured to allocate identification information corresponding to the non-shadow ray if it is determined that the input ray is the non-shadow ray and to store the information on the non-shadow ray and the identification information corresponding to the non-shadow ray in a first address of the consecutive addresses of the region in the memory.

9. The image processing apparatus as claimed in claim 8, further comprising:
a ray generator (110) configured to generate a first shadow ray derived from the non-shadow ray,
wherein the ray processor (140) further includes a shadow ray processor (143) configured to determine a second address of the consecutive addresses of the region in the memory in which the information on the first shadow ray is to be stored based on identification information on the non-shadow ray if the first shadow ray is input and to store the information on the first shadow ray in the memory based on the determined second address.

10. The image processing apparatus as claimed in claim 9, wherein the ray generator (110) is configured to generate a second shadow ray derived from the non-shadow ray and the shadow ray processor (143) is configured to determine a third address of the consecutive addresses of the region in the memory in which the information on the second shadow ray is to be stored based on the identification information on the non-shadow ray and to store the information on the second shadow ray in the memory based on the determined third address.

11. The image processing apparatus as claimed in claim 10, wherein the shader (160) is configured to generate an intersecting point data using the information on the non-shadow ray and the information on the first and second shadow rays derived from the non-shadow ray that are stored in the first to third addresses of the consecutive addresses of the region in the memory and to perform the shading operation based on the intersecting point data to determine a final color of the intersecting point based on the non-shadow rays.

12. The image processing apparatus as claimed in claim 11, wherein the intersecting point data includes coordinate information on the intersecting point of the non-shadow ray, index information of an object, and color information of the first and second shadow rays.

## Patentansprüche

1. Bildverarbeitungsverfahren, in einer Bildverarbeitungsvorrichtung, zum Schattieren bei der Strahlverfolgung, umfassend:
sequenzielles Speichern, in aufeinanderfolgenden Adressen eines Bereichs (310) in einem Speicher, von Informationen über einen Nichtschattenstrahl und Informationen über mindestens zwei von dem Nichtschattenstrahl abgeleiteten Schattenstrahlen, wobei die mindestens zwei Schattenstrahlen jeweils mindestens zwei virtuellen Lichtquellen entsprechen; und
Durchführen einer Schattierungsoperation unter Verwendung der Informationen über den Nichtschattenstrahl und der Informationen über die mindestens zwei Schattenstrahlen, die sequenziell in den aufeinanderfolgenden Adressen des Bereichs in dem Speicher gespeichert sind,
wobei das Durchführen der Schattierungsoperation umfasst:
Erzeugen von Schnittpunktdaten basierend auf den Informationen über den Nichtschattenstrahl und den Informationen über die mindestens zwei Schattenstrahlen, und
Durchführen der Schattierungsoperation basierend auf den erzeugten Schnittpunktdaten, um die finale Farbe für den Schnittpunkt basierend auf dem Nichtschattenstrahl zu bestimmen,
wobei der Nichtschattenstrahl eine virtuelle Linie ist, beginnend von einem Benutzer-Augpunkt, die einen bestimmten Bereich eines Objekts trifft, und
wobei die mindestens zwei Schattenstrahlen virtuelle Linien sind, die bestimmen, ob Licht direkt von den mindestens zwei virtuellen Lichtquellen an dem Schnittpunkt eintrifft.

2. Bildverarbeitungsverfahren nach Anspruch 1, ferner umfassend:
Empfangen (S510) eines Strahls;
Zuweisen von (S530) Identifikationsinformationen, die dem Nichtschattenstrahl entsprechen, wenn bestimmt wird (S520), dass der Eingangsstrahl der Nichtschattenstrahl ist; und
Speichern (S530) der Informationen über den Nichtschattenstrahl und der Identifikationsinformationen, die dem Nichtschattenstrahl entsprechen, an einer ersten Adresse der aufeinanderfolgenden Adressen des Bereichs in dem Speicher.

3. Bildverarbeitungsverfahren nach Anspruch 2, ferner umfassend:
Erzeugen eines ersten von dem Nichtschattenstrahl abgeleiteten Schattenstrahls;
Bestimmen (S620) einer zweiten Adresse der aufeinanderfolgenden Adressen des Bereichs in dem Speicher, an der die Informationen über den ersten Schattenstrahl gespeichert werden sollen, basierend auf den Identifikationsinformationen über den Nichtschattenstrahl; und
Speichern (S630) der Informationen über den ersten Schattenstrahl in dem Speicher basierend auf der bestimmten zweiten Adresse.

4. Bildverarbeitungsverfahren nach Anspruch 3, ferner umfassend:
Erzeugen eines zweiten von dem Nichtschattenstrahl abgeleiteten Schattenstrahls;
Bestimmen einer dritten Adresse der aufeinanderfolgenden Adressen des Bereichs in dem Speicher, an der die Informationen über den zweiten Schattenstrahl gespeichert werden sollen, basierend auf den Identifikationsinformationen über den Nichtschattenstrahl; und
Speichern der Informationen über den zweiten Schattenstrahl in dem Speicher basierend auf der bestimmten dritten Adresse.

5. Bildverarbeitungsverfahren nach Anspruch 4, wobei bei der Durchführung der Schattierungsoperation Schnittpunktdaten erzeugt werden unter Verwendung der Informationen über den Nichtschattenstrahl und der Informationen über die von dem Nichtschattenstrahl abgeleiteten ersten und zweiten Schattenstrahlen, die an der ersten bis dritten Adresse der aufeinanderfolgenden Adressen des Bereichs in dem Speicher gespeichert sind, und die Schattierungsoperation basierend auf den Schnittpunktdaten durchgeführt werden, um eine finale Farbe des Schnittpunkts basierend auf den Informationen über die Nichtschattenstrahlen zu bestimmen.

6. Bildverarbeitungsverfahren nach Anspruch 5, wobei die Schnittpunktdaten Koordinateninformationen über den Schnittpunkt des Nichtschattenstrahls, Indexinformationen über ein Objekt, und Farbinformationen über die ersten und zweiten Schattenstrahlen aufweisen.

7. Bildverarbeitungsvorrichtung zum Schattieren bei der Strahlverfolgung, umfassend:
einen Speicher (150);
einen Strahlprozessor (140), der dazu konfiguriert ist, an aufeinanderfolgenden Adressen eines Bereichs in dem Speicher Informationen über einen Nichtschattenstrahl und Informationen über mindestens zwei von dem Nichtschattenstrahl abgeleiteten Schattenstrahlen sequenziell zu speichern, wobei die mindestens zwei Schattenstrahlen mindestens zwei virtuellen Lichtquellen entsprechen; und einen Schattierer (160), der dazu konfiguriert ist, eine Schattierungsoperation unter Verwendung der Informationen über den Nichtschattenstrahl und der Informationen über die mindestens zwei Schattenstrahlen, die sequenziell in den aufeinanderfolgenden Adressen des Bereichs im Speicher gespeichert sind, durchzuführen;
wobei der Schattierer (160) konfiguriert ist zum:
Erzeugen von Schnittpunktdaten basierend auf den Informationen über den Nichtschattenstrahl und den Informationen über die mindestens zwei Schattenstrahlen, und
Durchführen der Schattierungsoperation basierend auf den erzeugten Schnittpunktdaten, um die finale Farbe für den Schnittpunkt basierend auf dem Nichtschattenstrahl zu bestimmen,
wobei der Nichtschattenstrahl eine virtuelle Linie ist, beginnend bei einem Benutzer-Augpunkt, die einen bestimmten Bereich eines Objekts trifft, und
wobei die mindestens zwei Schattenstrahlen virtuelle Linien sind, die bestimmen, ob Licht direkt von den mindestens zwei virtuellen Lichtquellen an dem Schnittpunkt eintrifft.

8. Bildverarbeitungsvorrichtung nach Anspruch 7, wobei der Strahlprozessor (140) aufweist:
einen Strahlenanalysator (141), der dazu konfiguriert ist, eine Art eines Eingangsstrahls zu analysieren, wenn ein Strahl, an dem ein Schnittpunkttest durchgeführt wird, eingegeben wird; und
einen Nichtschattenstrahl-Prozessor (142), der dazu konfiguriert ist, Identifikationsinformationen zuzuweisen, die dem Nichtschattenstrahl entsprechen, wenn bestimmt wird, dass der Eingangsstrahl der Nichtschattenstrahl ist, und die Informationen über den Nichtschattenstrahl und die Identifikationsinformationen, die dem Nichtschattenstrahl entsprechen, an einer ersten Adresse der aufeinanderfolgenden Adressen des Bereichs in dem Speicher zu speichern.

9. Bildverarbeitungsvorrichtung nach Anspruch 8, ferner umfassend:
einen Strahlerzeuger (110), der dazu konfiguriert ist, einen ersten von dem Nichtschattenstrahl abgeleiteten Schattenstrahl zu erzeugen,
wobei der Strahlprozessor (140) ferner einen Schattenstrahlprozessor (143) aufweist, der dazu konfiguriert ist, eine zweite Adresse der aufeinanderfolgenden Adressen des Bereichs in dem Speicher, an der die Informationen über den ersten Schattenstrahl gespeichert werden sollen, basierend auf Identifikationsinformationen über den Nichtschattenstrahl zu bestimmen, wenn der erste Schattenstrahl eingegeben wird, und die Informationen über den ersten Schattenstrahl basierend auf der bestimmten zweiten Adresse in dem Speicher zu speichern.

10. Bildverarbeitungsvorrichtung nach Anspruch 9, wobei der Strahlerzeuger (110) dazu konfiguriert ist, einen zweiten von dem Nichtschattenstrahl abgeleiteten Schattenstrahl zu erzeugen, und der Schattenstrahlprozessor (143) dazu konfiguriert ist, eine dritte Adresse der aufeinanderfolgenden Adressen des Bereichs in dem Speicher, an der die Informationen über den zweiten Schattenstrahl gespeichert werden sollen, basierend auf den Identifikationsinformationen über den Nichtschattenstrahl zu bestimmen, und die Informationen über den zweiten Schattenstrahl in dem Speicher basierend auf der bestimmten dritten Adresse zu speichern.

11. Bildverarbeitungsvorrichtung nach Anspruch 10, wobei der Schattierer (160) dazu konfiguriert ist, Schnittpunktdaten unter Verwendung der Informationen über den Nichtschattenstrahl und der Informationen über die von den Nichtschattenstrahlen abgeleiteten ersten und zweiten Schattenstrahlen, die an der ersten bis dritten Adresse der aufeinanderfolgenden Adressen des Bereichs in dem Speicher gespeichert sind, zu erzeugen, und die Schattierungsoperation basierend auf den Schnittpunktdaten durchzuführen, um eine finale Farbe des Schnittpunkts basierend auf den Nichtschattenstrahlen zu bestimmen.

12. Bildverarbeitungsvorrichtung nach Anspruch 11, wobei die Schnittpunktdaten Koordinateninformationen über den Schnittpunkt des Nichtschattenstrahls, Indexinformationen eines Objekts, und Farbinformationen des ersten und zweiten Schattenstrahls aufweisen.

## Revendications

1. Procédé de traitement d'images dans un appareil de traitement d'images pour l'ombrage dans le traçage de rayons, comprenant :
la sauvegarde séquentielle, dans des adresses consécutives d'une zone (310) d'une mémoire, d'informations sur un rayon sans ombre et
d'informations sur au moins deux rayons à ombre dérivés du rayon sans ombre, les au moins deux rayons à ombre correspondant à respectivement au moins deux sources de lumière virtuelle ; et
la réalisation d'une opération d'ombrage en utilisant les informations sur le rayon sans ombre et les informations sur les au moins deux rayons à ombre qui sont sauvegardées séquentiellement dans les adresses consécutives de la zone de la mémoire,
la réalisation de l'opération d'ombrage comprenant :
la génération de données de point d'intersection en se basant sur les informations du rayon sans ombre et les informations sur les au moins deux rayons à ombre,
la réalisation de l'opération d'ombrage en se basant sur les données de point d'intersection pour déterminer la couleur finale pour le point d'intersection en se basant sur le rayon sans ombre,
le rayon sans ombre étant une ligne virtuelle rencontrant une zone spécifique d'un objet en partant du point de vue d'un utilisateur, et
les au moins deux rayons à ombre étant des lignes virtuelles déterminant si la lumière arrive directement depuis les au moins deux sources de lumière virtuelle au point d'intersection.

2. Procédé de traitement d'images selon la revendication 1, comprenant en outre :
la réception (S510) d'un rayon ;
l'attribution (S530) d'informations d'identification correspondant au rayon sans ombre s'il est déterminé (S520) que le rayon d'entrée est le rayon sans ombre ; et
la sauvegarde (S530) des informations sur le rayon sans ombre et des informations d'identification correspondant au rayon sans ombre dans une première adresse des adresses consécutives de la zone de la mémoire.

3. Procédé de traitement d'images selon la revendication 2, comprenant en outre :
la génération d'un premier rayon à ombre dérivé du rayon sans ombre ;
la détermination (S620) d'une deuxième adresse des adresses consécutives de la zone de la mémoire dans laquelle les informations sur le premier rayon à ombre doivent être sauvegardées en se basant sur les informations d'identification du rayon sans ombre ; et
la sauvegarde (S630) des informations sur le premier rayon à ombre dans la mémoire en se basant sur la deuxième adresse déterminée.

4. Procédé de traitement d'images selon la revendication 3, comprenant en outre :
la génération d'un second rayon à ombre dérivé du rayon sans ombre ;
la détermination d'une troisième adresse des adresses consécutives de la zone de la mémoire dans laquelle les informations sur le second rayon à ombre doivent être sauvegardées en se basant sur les informations d'identification sur le rayon sans ombre ; et
la sauvegarde des informations sur le second rayon à ombre dans la mémoire en se basant sur la troisième adresse déterminée.

5. Procédé de traitement d'images selon la revendication 4, dans lequel, lors de la réalisation de l'opération d'ombrage, des données de points d'intersection sont générées en utilisant les informations sur le rayon sans ombre et les informations sur les premier et second rayons à ombre dérivés du rayon sans ombre qui sont sauvegardées dans les première à troisième adresses des adresses consécutives de la zone de la mémoire et l'opération d'ombrage est réalisée en se basant sur les données de points d'intersection pour déterminer une couleur finale du point d'intersection en se basant sur les informations sur les rayons sans ombre.

6. Procédé de traitement d'images selon la revendication 5, dans lequel les données de points d'intersection incluent des informations de coordonnées sur le point d'intersection du rayon sans ombre, des informations d'indice sur un objet, et des informations de couleur sur les premier et second rayons à ombre.

7. Appareil de traitement d'images pour l'ombrage dans le traçage de rayons, comprenant :
une mémoire (150) ;
un processeur de rayons (140) conçu pour sauvegarder séquentiellement, dans des adresses consécutives d'une zone de la mémoire, des informations sur un rayon sans ombre et des informations sur au moins deux rayons à ombre dérivés du rayon sans ombre, les au moins deux rayons à ombre correspondant à respectivement au moins deux sources de lumière virtuelle ; et
un ombreur (160) conçu pour réaliser une opération d'ombrage en utilisant les informations sur le rayon sans ombre et les informations sur les au moins deux rayons à ombre qui sont sauvegardées séquentiellement dans les adresses consécutives de la zone de la mémoire,
l'ombreur (160) étant conçu pour :
générer des données de point d'intersection en se basant sur les informations du rayon sans ombre et les informations sur les au moins deux rayons à ombre,
réaliser l'opération d'ombrage en se basant sur les données de point d'intersection pour déterminer la couleur finale pour le point d'intersection en se basant sur le rayon sans ombre,
le rayon sans ombre étant une ligne virtuelle rencontrant une zone spécifique d'un objet en partant du point de vue d'un utilisateur, et
les au moins deux rayons à ombre étant des lignes virtuelles déterminant si la lumière arrive directement depuis les au moins deux sources de lumière virtuelle au point d'intersection.

8. Appareil de traitement d'images selon la revendication 7, dans lequel le processeur de rayons (140) inclut :
un analyseur de rayons (141) conçu pour analyser un type de rayon d'entrée si un rayon sur lequel un test d'intersection est réalisé est entré ; et
un processeur de rayons sans ombre (142) conçu pour attribuer des informations d'identification correspondant au rayon sans ombre s'il est déterminé que le rayon d'entrée est le rayon sans ombre et pour sauvegarder les informations sur le rayon sans ombre et les informations d'identification correspondant aux rayons sans ombre dans une première adresse des adresses consécutives de la zone de la mémoire.

9. Appareil de traitement d'images selon la revendication 8, comprenant en outre :
un générateur de rayons (110) conçu pour générer un premier rayon à ombre dérivé du rayon sans ombre,
le processeur de rayons (140) incluant en outre un processeur de rayons à ombre (143) conçu pour déterminer une deuxième adresse des adresses consécutives de la zone de la mémoire dans laquelle les informations sur le premier rayon à ombre doivent être sauvegardées en se basant sur des informations d'identification sur le rayon sans ombre si le premier rayon est entré et pour sauvegarder les informations sur le premier rayon à ombre dans la mémoire en se basant sur la deuxième adresse déterminée.

10. Appareil de traitement d'images selon la revendication 9, dans lequel le générateur de rayons (110) est conçu pour générer un second rayon à ombre dérivé du rayon sans ombre et le processeur de rayons à ombre (143) est conçu pour déterminer une troisième adresse des adresses consécutives de la zone de la mémoire dans laquelle les informations sur le second rayon à ombre doivent être sauvegardées en se basant sur les informations d'identification sur le rayon sans ombre et pour sauvegarder les informations sur le second rayon à ombre dans la mémoire en se basant sur la troisième adresse déterminée.

11. Appareil de traitement d'images selon la revendication 10, dans lequel l'ombreur (160) est conçu pour générer des données de points d'intersection en utilisant les informations sur le rayon sans ombre et les informations sur les premier et second rayons à ombre dérivés du rayon sans ombre qui sont sauvegardées dans les première à troisième adresses des adresses consécutives de la zone de la mémoire et pour réaliser l'opération d'ombrage en se basant sur les données de point d'intersection pour déterminer une couleur finale du point d'intersection en se basant sur les rayons sans ombre.

12. Appareil de traitement d'images selon la revendication 11, dans lequel les données de point d'intersection incluent des informations de coordonnées sur le point d'intersection du rayon sans ombre, des informations d'indice d'un objet, et des informations de couleur des premier et second rayons à ombre.
